# EUROPEAN PATENT SPECIFICATION

(11) **EP 1 874 430 B1**
(45) Date of publication and mention of the grant of the patent: **12.11.2008**
(21) Application number: 06750193.2
(22) Date of filing: 13.04.2006
(51) Int. Cl.: B01D 39/16, B03C 3/28, B60H 3/06

(54) **VEHICLE PASSENGER COMPARTMENT AIR FILTER DEVICES**
LUFTFILTERVORRICHTUNGEN FÜR FAHRGASTZELLEN
DISPOSITIFS DE FILTRE A AIR POUR HABITACLE DE VEHICULE

(30) Priority: 22.04.2005 EP 05008857
(43) Date of publication of application: 09.01.2008
(73) Proprietor: 3M Innovative Properties Company, St. Paul MN 55133-3427 (US)
(72) Inventor: LOTGERINK-BRUINENBERG, Marcus, 41453 Neuss (DE)
(74) Representative: Aleandri-Hachgenei, Lorraine E.
(86) International application number: PCT/US2006/014085
(87) International publication number: WO 2006/115831

(56) References cited:
- EP-A- 0 383 236
- EP-A- 1 068 889
- DE-A1- 4 143 237
- US-B1- 6 261 342
- US-B1- 6 432 175

## Description

This invention relates to vehicle passenger compartment air filter devices, in particular filtration media thereof, suitable for filtration of air borne particles in air for a passenger compartment of such a vehicle.

Vehicle passenger compartment (or automotive interior cabin) filtration is a particularly difficult filtration application, due to the targeting of particle filtration and/or gas adsorption together with a demand for very low pressure drop performance in consideration of limited fan capabilities, all within highly limited space considerations. Commercial vehicle passenger compartment air filters suffer a number of drawbacks including low loading capacity and relatively high pressure drop through the filter. Furthermore, in order to keep pressure drop within acceptable limits, although still not satisfactorily or desirably low, particle capture (filtration) efficiency must often be compromised. This disadvantage of compromised particle capture efficiency is most often compounded by the observance of a loss of particle capture efficiency as a function of time, e.g. upon loading or exposure, of such filter media and filters.

In light of the increasing awareness of the hazards associated with certain air borne particles, such as sub-micron particles, there is an ongoing need for vehicle passenger compartment air filter devices, in particular filtration media thereof, having high particle capture efficiency, in particular high sub-micron particle capture efficiency combined with high loading capacity and low pressure drop performance while possessing stable operating characteristics, e.g. maintaining particle capture efficiency upon loading and/or exposure.

According to the invention there is provided a vehicle passenger compartment air filter device comprising a filtration medium comprising
(i) a first filter layer comprising an electrostatically charged split fiber nonwoven layer and optionally a scrim affixed to said split fiber layer;
(ii) a nonwoven web of electret charged thermoplastic microfibers as a second filter layer, said microfibers having an effective fiber diameter (EFD) of greater than 10 µm and comprising a thermoplastic resin having a resistivity greater than 10¹⁴ ohm·cm and an additive selected from fluorochemical compounds or oligomers, organic triazine compounds or oligomers, hindered amine compounds, aromatic amine compounds, nitrogen containing hindered phenols, metal containing hindered phenols and mixtures thereof; said web having a basis weight less than 60 g/m²; and
(iii) a support layer made of a web material having an air permeability of 3750 I/(m²xs) or more at 200 Pa;
said first filter layer being upstream from said second filter layer and said support layer being downstream from said second filter layer, wherein the first and second filter layers and the support layer are co-pleated and substantially non-bonded to one another except optionally at one or more of the outer edges of the filtration medium.

Surprisingly, it was found that, for example, desirably high loading capacity (e.g. loadings of at least 35 g after an increase in pressure drop of 100 Pa) and high initial particle capture efficiency (e.g. initial particle capture efficiency of greater than 93% for 0.4 µm particles) as well as a favorable maintenance of high particle capture efficiency upon loading (e.g. particle capture efficiency of at least 90% for 0.4 µm particles during loading upon an increase of 50 Pa in pressure drop) can be achieved together with advantageously low initial pressure drops (e.g. a pressure drop of not more than 70 Pa for filters with a filter face area of 250 mm x 200 mm, a pleat height of 30 mm and a pleat distance (peak to peak) of about 5 to about 14 mm at a volumetric flow rate of 225 m³/h). In particular it is surprising that such advantageous performance can be achieved with a limited number of layers and/or without the application of bulky layers, which is also advantageous relative to cost considerations as well as dimensional and pleating considerations facilitating favorable performance.

The dependent claims define further embodiments of the invention.

The invention, its embodiments and further advantages will be described in the following with reference to the following drawings or figures.
Figure 1 represents a schematic view of an exemplary vehicle passenger compartment air filter device.
Figure 2 represents a schematic, enlarged cross-sectional view of a region of an exemplary filtration medium suitable for use in vehicle passenger compartment air filter device.

It is to be understood that the present invention covers all combinations of suitable, particular, desirable, advantageous, favorable and preferred aspects of the invention described herein.

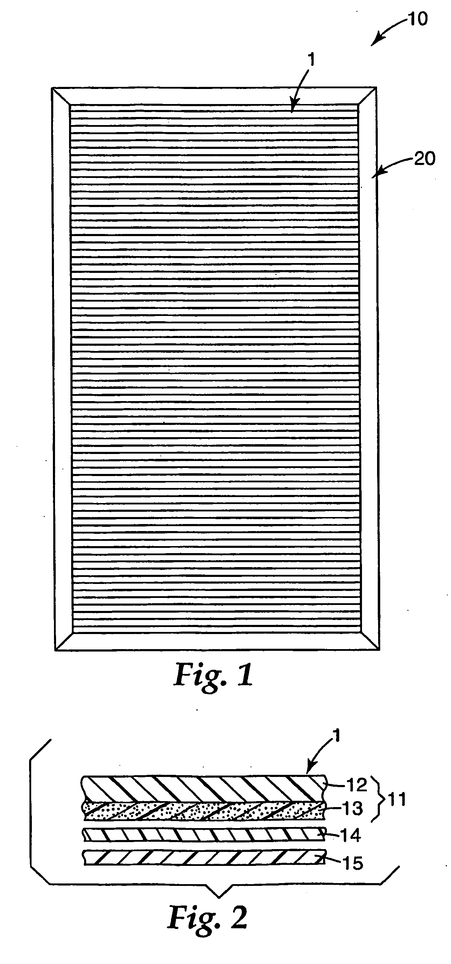

Referring to Figure 1 showing a schematic view of an exemplary filter device for filtering air flowing in the passenger compartment of a vehicle, such a device (10) comprises a filtration medium (1). The device (10) may also include a frame or a housing (20) onto which the filtration medium may be connected. Typically such a frame or housing is made of polymeric material. The filtration medium (1), in particular its outer edges, may be sealed to a portion of the inner wall of the frame or housing, for example through adhesive or by ultrasonic welding such as described in US 5,512,172. Alternatively the filtration medium, again its outer edges, may be sealed to the frame or housing wall while producing the frame by injection molding, whereby the edges of the filtration medium will be then embedded by the plastic material of the frame by an insert molding process. Suitable insert molding techniques are described in US 5,679,122 and EP 713 421.

Referring to Figure 2 showing a schematic, partial cross-sectional view of an exemplary filtration medium (1) e.g. suitable for use in the exemplary filter device shown in Figure 1, the filtration medium includes a first filter layer (11) including an electrostatically charged split fiber nonwoven web layer (12) (described in detail below) upstream from a second filter layer (14) (described in detail below) as well as a support layer (15) (described in detail below) downstream from the second filter layer.

The first filter layer (11), the second filter layer (14) and the support layer (15) are co-pleated and substantially non-bonded, preferably non-bonded, to one another except optionally at the outer edges or periphery of the filtration medium. One or more of the outer edges may be bonded to form a seam along said edge(s) or around the periphery of the medium for example in order to facilitate handling and/or converting and/or connection to a frame or a housing, if used. The term "substantially non-bonded" preferably means less than 4% bonding, more preferably less than 2% bonding, relative to the total surface area of the filtration medium excluding, if present, any bonded seam area along an outer edge or outer edges or periphery of the medium. If present, the surface area of any bonded seam area along an outer edge or outer edges or periphery of the medium will typically represent less than 8% (more suitably less than 6%, most suitably less than 4%) of the total surface area of the filtration medium.

As mentioned above, the first filter layer (11) includes a layer (12) made of an electrostatically charged split fiber nonwoven web. Exemplary methods for the production of electrostatically charged split filber nonwoven webs are described in U.S. Reissue Pat. No. 30.782 and U.S. Reissue Pat. No. 31.285. For example the production of such webs generally comprises feeding a film of a high molecular weight nonpolar substance, stretching the film, charging the stretched the film (e.g. with the aid of corona elements) and fibrillating the stretched charged film.

For desirable performance over the lifetime of the filter device, in particular upon exposure of elevated temperatures, such as 60°C or higher (more suitably 80°C or higher), the material of the film (and thus the material of the split fibers) advantageously comprise a polymeric resin, in particular a polymeric resin substantially free (e.g. less than 2 % by weight), more preferably free of polyethylene. Preferably the polymeric resin is selected from polypropylene, polystyrene, polycarbonate, polyamide, polyester as well as mixtures, copolymers and blends thereof. Polypropylene is more preferred. The film is preferably locally, bilaterally (on both faces of the film) charged by means of corona elements that carry either side of the film equal but opposite potentials. The charged polymeric film material can be fibrillated in several ways, e.g. using a needle roller with metal needles running against the film. Thereafter the continuous fibers may be cut to in length. The obtained fibers can then be formed into a nonwoven web layer through carding or air laying or other web forming process.

For the herein described filter devices, split fibers are preferably rectangular in cross-section. For desirable filtration performance, preferred cross-sectional dimensions of the split fibers in the first filter layer are about 9 to about 20 µm in thickness (more preferably about 9 to about 15 µm in thickness), about 15 to about 75 µm in width (more preferably about 20 to about 70 µm in width). Also for desirable filtration performance, the split fibers in the split fiber nonwoven are desirably 5 mm or greater in length, more desirably from 5 mm to about 80 mm in length. More particularly the average length (e.g. as determined via electron microscopy) of the split fibers in the split filber nonwoven is favorably from about 12 to about 70 mm in length, more favorably about 20 to about 60 mm in length, most favorably about 25 to about 50 mm in length.

For favorable dimensional and pleating considerations and/or favorable filtration performance, preferably an electrostatically charged split fiber nonwoven web for use in the first filter layer has a basis weight of less than 70 g/m², more preferably less than 55 g/m², even more preferably less than 45 g/m² and most preferably less than 30 g/m². Within this range, such webs desirably have basis weights of 5 g/m² or more, more desirably 10 g/m² or more. In those embodiments in which the first filter layer includes more than one layer of an electrostatically charged split fiber nonwoven, desirably the sum of the basis weights of the individual split fiber nonwoven layers are less than 70 g/m², more desirably less than 55 g/m², even more desirably less than 45 g/m² and most desirably less than 30 g/m².

As can be appreciated from the exemplary filtration medium (1) shown in Figure 2, in order to facilitate the structural integrity and/or manufacture or converting, the first filter layer (11) may optionally include a scrim (13), e.g. downstream of the split fiber web layer (12). In alternative embodiments, such a scrim may be upstream of the split fiber nonwoven web layer, or two scrims may be provided one upstream and the other downstream of the split fiber nonwoven web layer, or in further alternative embodiments, the first filter layer may include two layers, each made of an electrostatically charged split fiber nonwoven web, with a scrim provided between the two split fiber nonwoven webs. Generally if such a scrim is used, it is affixed, preferably mechanically and/or thermally (e.g. by hydro-entangling, needle punching, ultrasonic bonding (a suitable method of ultrasonic bonding is described in EP 1 197 252)), to the split fiber nonwoven web(s).

Preferably the first filter layer consists of one or more layers (more preferably one to three layers, even more preferably one or two layers, most preferably one layer), each made of an electrostatically charged split fiber nonwoven web and optionally one or more scrims (more preferably one to four scrims, even more preferably one to three scrims, yet even more preferably one or two scrims, most preferably one scrim), each scrim being affixed to said split fiber nonwoven web or webs.

In embodiments in which the first filter layer includes additional layers to an (one) electrostatically charged split fiber nonwoven web layer, preferably all the layers making up the first filter layer are affixed to one another.

Scrims may be suitably made of nonwoven (e.g. wet-laid, air-laid (such as spunlace, calendered, needle-punched, chemical bonded air-laids) or spunbond nonwovens), woven or netting materials. Nettings or nonwovens are preferred; spunbond nonwovens being more preferred. Scrims advantageously comprise a polymeric resin, in particular a polymeric resin substantially free (e.g. less than 2 % by weight), more preferably free of polyethylene. Preferably the polymeric resin is selected from polypropylene, polystyrene, polycarbonate, polyamide, polyester as well as mixtures, copolymers and blends thereof. Polypropylene resin is more preferred. Air permeabilities of 3750 l/(m²xs) or more at 200 Pa (as e.g. determined in accordance with DIN 53887) for scrims (for the flat web material thereof) are favorable, with air permeabilities of 4250 l/(m²xs) or more at 200 Pa being more favorable, air permeabilities of 4750 l/(m²xs) or more at 200 Pa being even more favorable and air permeabilities of 5000 l/(m²xs) or more at 200 Pa most favorable. Preferably the web materials used for scrims have a basis weight of 15 g/m² or less, more preferably 12 g/m² or less, most preferably 10 g/m² or less. Desirably web materials used for scrims have a thickness of 0.3 mm or less, 0.2 mm or less, most desirably 0.1 mm or less (as e.g. measured in accordance ISO 9073-2, Method A, 23°C and 50% relative humidity).

In embodiments including a first filter layer having a scrim (or scrims) preferably the first filter layer has a basis weight of less than 85 g/m² or less, more preferably less than 70 g/m², even more preferably less than 60 g/m² or less or most preferably less than 45 g/m².

Air permeabilities of 2800 l/(m²xs) or more at 200 Pa (as e.g. determined in accordance with DIN 53887) for the flat web material (e.g. split fiber nonwoven web layer(s) including scrim(s) if present) of first filter layer have been found to be particularly favorable for desirable filtration performance, with air permeabilities of 3200 l/(m²xs) or more at 200 Pa being even more favorable, 3800 l/(m²xs) or more at 200 Pa yet even more favorable and air permeabilities of 4500 l/(m²xs) or more at 200 Pa most favorable. Generally, within this range air permeabilities of 9000 l/(m²xs) or less at 200 Pa are suitable, 8000 l/(m²xs) or less at 200 Pa more suitable and 7000 l/(m²xs) or less at 200 Pa most suitable.

Aerosolized, neutralized NaCl filter efficiencies of 10 % or more for the flat web material (e.g. split fiber nonwoven web layer(s) including scrim(s) if present) of first filter layer have been found to be particularly favorable for desirable filtration performance, with aerosolized, neutralized NaCl filter efficiencies of 12% or more being even more favorable and aerosolized, neutralized NaCl filter efficiencies of 15% or more being most favorable. Aerosolized, neutralized NaCl filter efficiency is preferably measured using an apparatus commercially available under the trade designation AFT 8130 from TSI Inc and using NaCl crystals generated from an aqueous solution (20 g of NaCl per liter) which is sprayed so that water is evaporated resulting in aerosolized and neutralized NaCl crystals having a mass mean diameter of about 0.26 µm ((count median diameter 0.07 µm) e.g. as determined using a scanning mobility particle sizer, such as TSI model 3934) wherein the volumetric flow rate is 60 l/min and the test area size of the material is 50 cm².

The filtration medium further comprises a nonwoven web, preferably a meltblown nonwoven web, of electret charged thermoplastic microfibers as a second filter layer. For desirable filtration performance it has been found advantageous that the microfibers have an effective fiber diameter (EFD) of greater than 10 µm. For further enhanced performance, the EFD is more desirably about 1.1 µm or higher, most desirably about 12 µm or higher. Suitably EFD is about 20 µm or less, more desirably about 18 µm or less, most desirably about 16 µm or less. EFD is determined according to the method set forth in Davis, C. N. "The Separation of Airborne Dust and Particulates," Proc. Inst. Mech. Engrs., London, 1B, p. 185, (1952).

The thermoplastic microfibers of the second filter layer comprise a nonconductive thermoplastic resin, i.e. a thermoplastic resin having a resistivity of at least 10¹⁴ ohm·cm, preferably of at least 10¹⁶ ohm·cm. Suitable nonconductive thermoplastic resins include those that have the capability of possessing a non-transitory or long lived trapped charge. The resin can be a homopolymer or copolymer or polymer blend. Suitable polymers include polyolefins; such as polypropylene, poly(4-methyl-1-pentene) or linear low density polyethylene; polyvinylchloride; polystyrene; polycarbonate and polyester. It has been found that for desirable performance over the lifetime of the filter device, in particular upon exposure of elevated temperatures, such as 60°C or higher, more suitably 80°C or higher, it is advantageous that the microfibers are substantially free (e.g. less than 2% by weight), more preferably free of polyethylene. Preferably the thermoplastic resin is selected from polypropylene, poly(4-methyl-1-pentene), polystyrene, polycarbonate, polyester and mixtures thereof, more preferably polypropylene, poly(4-methyl-1-pentene), blends thereof or copolymers formed from at least one of propylene and 4-methyl-1-pentene. The major component of the polymer or polymer blend is preferably polypropylene because of polypropylene's high resistivity, satisfactory charge stability, hydrophobicity and resistance to humidity.

The thermoplastic microfibers of the second filter layer also comprise an additive selected from fluorochemical compounds and oligomers, triazine compounds or oligomers, hindered amine compounds, aromatic amine compounds, nitrogen containing hindered phenols, metal containing hindered phenols and mixtures thereof. The additive advantageously enhances the filtration performance of the filtration medium and is referred to in the following as a performance enhancing additive.

Suitable fluorochemical performance-enhancing additives include fluorochemical compounds and oligomers such as those described by Jones et al., U.S. Pat. No. 5,472,481 and Rousseau et al., WO 97/07272. Fluorochemical additives desirably include organic compounds or oligomers containing at least one perfluorinated moiety, such as fluorochemical piperazines, stearate esters of perfluoroalcohols, fluorochemical oxazolidinones. Such compounds or oligomers preferably have a fluorine content of at least about 18 percent by weight. Desirably such fluorochemical additives are thermally stable, i.e. thermally stable at the extrusion temperature of the polymeric resin in order to withstand processing without undesirable degradation or volatilization; usually molecular weights of 500 or greater are sufficient to avoid excessive volatilization. Desirably the fluorochemical compound or oligomer has a melting point above the melting point of the thermoplastic resin polymer(s) and below the extrusion temperature. For processing considerations, for example when using polypropylene, the fluorochemicals preferably have a melting point above 160°C and more preferably a melting point of 160°C to 290°C. Preferred fluorochemical additives include Additives A, B and C of U.S. Pat. No. 5,411,576 having the respective structures, 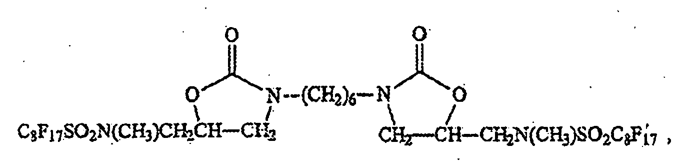 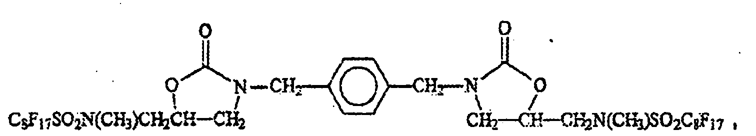 and

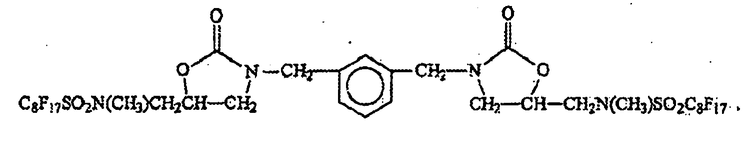

Suitable triazine compounds or oligomers include those described in WO 97/07272. Triazine additives desirably include organic triazine compounds or oligomers with at least one additional nitrogen-containing group. Again such additives are desirably thermally stable (thermally stable at the extrusion temperature of the polymeric resin in order to withstand processing without undesirable degradation or volatilization). Such compounds or oligomers having a molecular weight of usually at least 500 generally do not undergo volatilization. Preferred triazines include those having the following generic structure, where R₂ is an alkyl group, which may be straight chain or branched and preferably having 4 to 10 carbon atoms and n is a number from 2 to 40, preferably 2 to 20.

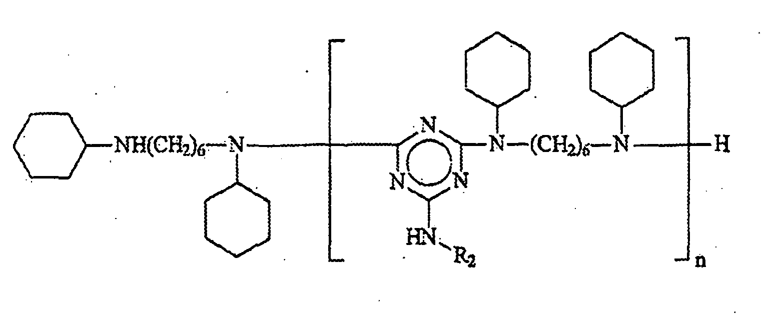

The performance enhancing additive may suitably be a hindered or aromatic amine compound; preferably a compound containing a hindered amine such as those derived from tetramethylpiperidine rings, 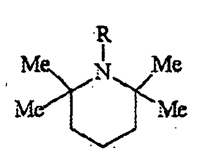 where R is hydrogen or an alkyl group. Preferably the hindered amine is associated with a triazine group as described above. Alternatively, nitrogen or metal containing hindered phenol charge enhancers may be suitably used, such as those disclosed in U.S. Pat. No. 5,057,710.

The nonwoven web of the second filter layer of the filtration medium preferably contains at least 0.01 weight percent, more preferably 0.1 weight percent, even more preferably at least 0.2 weight percent and most preferably at least 0.5 weight percent of performance-enhancing additive based on the weight of the web. The nonwoven web of the second filter layer preferably contains at most 10 weight percent, more preferably at most 5.0 weight percent and most preferably at most 2.0 weight percent of performance-enhancing additive based on the weight of the web.

Suitably the fibers of the nonwoven web of the second filter layer are formed from a blend of thermoplastic resin and additive. In particular, resin and performance-enhancing additive may be blended as solids before melting them, or melted separately and blended together as liquids. Alternatively, additive and a portion of resin can be mixed as solids and melted to form a relatively additive-rich molten blend that is subsequently combined with a further portion of resin.

The fibers of the nonwoven web of the second filter layer are preferably formed by melt blowing using melt-blowing processes and apparatuses that are well known in the art. For example in producing fibers forming a melt blown nonwoven web for the filter layer of the filtration medium, a molten blend of resin and additive may be extruded through a fiber die onto a collecting surface and formed into a web of thermoplastic microfibers. Such microfibers are typically integrally bonded each to the other at their crossover points either during the web formation process or after the web formation process. The fibers can be a single layer or multiple layers or of a sheath-core configuration. If multiple layers are employed at least some of the outer layers or the sheath layer preferably contain the performance-enhancing additive as described in the blends.

The collected web material may be annealed to increase electrostatic charge stability in the presence of oily mists. Preferably, the annealing step is conducted at a sufficient temperature and for a sufficient time to cause the performance-enhancing additive to diffuse to the interfaces (e.g., the polymer-air interface, and the boundary between crystalline and amorphous phases) of the material. Generally, higher annealing temperatures allow shorter annealing times. To obtain desirable properties for the final product, annealing of polypropylene materials are generally conducted above about 100°C. Preferably, annealing is conducted from about 130 to 155°C for about 2 to 20 minutes; more preferably from about 140 to 150°C for about 2 to 10 minutes; and still more preferably about 150°C for about 4.5 minutes. Annealing should be conducted under conditions that do not substantially degrade the structure of the web. For polypropylene webs, annealing temperatures substantially above about 155°C may be undesirable because the material can be damaged.

Fibers of the nonwoven web of the second filter layer are electret charged. Examples of electrostatic charging methods useful to produce electret charged fibers include those described in U.S. Pat. Nos. 5,401,446 (Tsai, et al.), 4,375,718 (Wadsworth et al.), 4,588,537 (Klaase et al.), and 4,592,815 (Nakao). For yet further enhanced filtration performance (e.g. particle capture efficiency), fibers of the nonwoven web are preferably hydrocharged, i.e. nonwoven web is subjected to hydrocharging by impinging jets of water or a stream of water droplets onto the web at a pressure sufficient to provide the web with a filtration enhancing electret charge (see e.g. U.S. Pat. No.5,496,507 to Angadjivand et al). The pressure necessary to achieve optimum results will vary depending on the type of sprayer used, the type of polymer from which the web is formed, the type and concentration of additives to the polymer and the thickness and density of the web. Generally, pressures in the range of about 10 to 500 psi (69 to 3450 kPa) are suitable. Preferably the water used to provide the water droplets is relatively pure. Distilled or deionized water is preferable to tap water. The jets of water or stream of water droplets can be provided by any suitable spray means. Apparatus useful for hydraulically entangling fibers are generally useful, although operation is carried out at lower pressures in hydrocharging than generally used in hydroentangling. It has been found that for favorable enhanced filtration performance it is advantageous not to subject the fibers of the nonwoven web to a corona discharge or a high pulsed voltage, for example as a pre- or post-treatment, to hydrocharging, more particularly it has been found particularly advantageous that the fibers of the nonwoven web are only hydrocharged e.g. the fibers are not subjected to other types of charging (as a pre- or post-treatment to hydrocharging).

The nonwoven web of the second filter layer of the filtration medium has a basis weight of less than 60 g/m², preferably 55 g/m² or less, most preferably 50 g/m² or less. The nonwoven web of the filter layer of the filtration medium generally has a basis weight of 20 g/m² or more, more preferably 25 g/m² or more, most preferably 30 g/m² or more.

Air permeabilities of 1000 l/(m²xs) or more at 200 Pa (as e.g. determined in accordance with DIN 53887) for nonwoven web (for the flat material) of the second filter layer have been found to be particularly favorable for desirable filtration performance, with air permeabilities of 1250 l/(m²xs) or more art 200 Pa being even more favorable and air permeabilities of 1500 l/(m²xs) or more at 200 Pa most favorable. Generally, air permeabilities of 3725 l/(m²xs) or less at 200 Pa are suitable for nonwoven web of filter layer, 3500 l/(m²xs) or less at 200 Pa more suitable and 3250 l/(m²xs) or less at 200 Pa most suitable.

For desirable dimensional and pleating considerations and thus favorable filtration performance of filtration medium, favorable thicknesses of the second filter layer nonwoven web are 1.50 mm or less, more favorable 1.25 mm or less and most favorably 1.00 mm or less (as e.g. measured in accordance ISO 9073-2, Method A, 23°C and 50% relative humidity). Suitably the thickness of the second filter layer nonwoven web is at least 0.25 mm, more suitably at least 0.35 mm, most suitably at least 0.45 mm.

As mentioned above the filtration medium further includes a support layer made of a web material having a high air permeability of 3750 l/(m²xs) or more at 200 Pa (more preferably 4000 l/(m²xs) or more at 200 Pa, even more preferably 4500 l/(m²xs) or more at 200 Pa, yet even more preferably 4750 l/(m²xs) or more at 200 Pa, most preferably 5000 l/(m²xs) or more at 200 Pa for the flat material (e.g. as determined in accordance with DIN 53887).

Support layer may suitably be made of a nonwoven (e.g. wet-laid, air-laid (such as spunlace, calendered, needle-punched, chemical bonded air-laids) or spunbond nonwovens), a woven or a netting web material. Preferably the support layer is made of a nonwoven web material, more preferably a spunbond nonwoven web material.

For desirable performance over the lifetime of the filter device, in particular upon exposure of elevated temperatures, such as 60°C or higher (more suitably 80°C or higher), again it is advantageous that the support layer comprises a polymeric resin, in particular a polymeric resin substantially free (e.g. less than 2 % by weight), more preferably free of polyethylene. Preferably the polymeric resin is selected from polypropylene, polystyrene, polycarbonate, polyamide, polyester as well as mixtures, copolymers and blends thereof.

To further facilitate manufacture, handling and/or converting and/or structural integrity and/or filtration performance of the medium, preferably the support layer web has a basis weight of 60 g/m² or more, more preferably 70 g/m² or more, most preferably 80 g/m² or more. The support layer web preferably has a basis weight of 150 g/m² or less, more preferably 130 g/m² or less, most preferably 110 g/m² or less.

For enhanced facilitation of the structural integrity of the filtration medium, desirably the web material used for the support layer has a tensile strength (MD) (and in the longitudinal direction (i.e. in the direction from one pleat to the next) of the filter device) of 80 N/5cm² or more (more desirably 100 N/5cm² or more, most desirably 120 N/5cm² or more) (e.g. as determined in accordance with DIN EN 29073, part 3 (test pieces 100 mm in C-form, extension rate 200 mm/min, 23°C and 50% relative humidity)). Within this range, the web material for the support layer desirably has a tensile strength (MD) of 250 N/5cm² or less (more desirably 225 N/5cm² or less, most desirably 175 N/5cm² or less) (e.g. as determined in accordance with DIN EN 29073, part 3 (test pieces 100 mm in C-form, extension rate 200 mm/min, 23°C and 50% relative humidity)).

Again for desirable dimensional and pleating considerations and thus favorable filtration performance of filtration medium, favorable thicknesses of the support layer web material are 1.0 mm or less, more favorable 0.75 mm or less and most favorably 0.6 mm or less (as e.g. measured in accordance ISO 9073-2, Method A, 23°C and 50% relative humidity). Within this range a minimal thickness of about 0.1 mm is suitable, about 0.2 mm more suitable, and about 0.3 mm most suitable.

Filter devices of the present invention will typically show advantageously high initial particle capture efficiency of greater than 93 % (more desirably at least 94%, even more desirably at least 96%, most desirably at least 98%) for 0.4 µm particles for example as measured according to DIN 71460-1.

Filter devices of the present invention will typically show desirable maintenance of particle capture efficiency upon loading, such as particle capture efficiencies of at least 90% (more desirably 92%, even more desirably 94%, most desirably 96%) for 0.4 µm particles during loading at an increase of 50 Pa in pressure drop, e.g. as measured according to DIN 71460-1.

Filter devices of the present invention will typically show desirable maintenance of particle capture efficiency upon loading, such as particle capture efficiencies of at least 90% (more desirably 92%, even more desirably 94%, most desirably 96%) for 0.4 µm particles during loading at an increase of 100 Pa in pressure drop, e.g. as measured according to DIN 71460-1.

Filter devices of the present invention will typically show desirable loading capacities of at least 35 g (more desirably at least 40 g, even more desirably at least 43 g, yet even more desirably at least 47 g, most desirably at least 50 g) after an increase in pressure drop of 100 Pa, e.g. as measured according to DIN 71460-1.

Filter devices of the present invention will typically show advantageously low initial pressure drops of not more than 70 Pa (more advantageously not more than 65 Pa, most advantageously not more than 60 Pa) for filters with a filter face area of 250 mm x 200 mm, a pleat height of 30 mm and a pleat distance (peak to peak) of about 5 to about 14 mm (more suitably a pleat distance of about 6 to 12 mm, most suitably a pleat distance of about 8.5 mm) at a volumetric flow rate of 225 m³/h, e.g. as measured according to DIN 71460-1.

The invention will be illustrated by the following Examples.

### Materials used

An electrostatically charged polypropylene split fiber nonwoven web material available under the trade designation FILTRETE GSB30 from 3M Company, USA was used and referred to in the following as SF. The SF web - including a 20 g/m² basis weight split fiber nonwoven layer with polypropylene fibers having a rectangular cross section having an average dimension of approximately 10 µm by 40 µm and an average length of approximately 30mm needle punched to a 10 g/m² basis weight, polypropylene spunbond, approximately 0.1 mm thick scrim layer - had an air permeability of 5198 l/m²xs at 200 Pa and an aerosolized, neutralized NaCl filter efficiency of 20 %.

A polyester spunbond web material having a basis weight of 80 g/m² available under the trade designation 688/80 from Johns Manville, Berlin, Germany was used and referred to in the following as SL. The SL web material had an air permeability of 5069 l/m²xs at 200 Pa, a thickness of approximately 0.5 mm and a maximum tensile strength (MD) of 141 N/5cm².

Melt blown nonwoven web materials prepared according to the following were used.

Oligomeric hindered amine CHIMASSORB^{™} 944FL (available from Ciba-Geigy Corp., Hawthorne/NY, USA) was melt compounded into poly(4-methyl-1-pentene) (TPX DX 820, available from Mitsui Petrochemical Industries, Tokyo, Japan) in a single screw extruder in a 40:60 ratio and the resultant blend was extruded into a large diameter fiber. The fiber was subsequently ground into a powder (0.125 inch mesh). The powder was added to the a polypropylene pellet (a 400 melt flow index polypropylene resin available from Exxon Corp., Houston/TX, USA) feed during preparation of melt blown microfiber web to obtain a polypropylene resin composition consisted of 98 wt.% polypropylene, 1.2 wt.% poly(4-methyl-1-pentene), and 0.8 wt.% CHIMASSORB^{™} 944FL. This resin blend was fed into an extrusion process for preparing a melt blown microfiber web using a melt blowing process similar to that described, for example, in Wente, "Superfine Thermoplastic Fibers," in Industrial Engineering Chemistry, Vol. 48, pages 1342 et seq (1956) or in Report No. 4364 of the Naval Research Laboratories, published May 25, 1954, entitled "Manufacture of Superfine Organic Fibers" by Wente et al. The extruder had four temperature control zones which were maintained at 250°C, 290°C, 320°C, and 320°C, the flow tube connecting the extruder to the die (with 25 holes) was maintained at 300°C, and melt blown die was maintained at 300 °C. The primary air was maintained at about 400°C and 690 kilopascals (kPa) with a 0,076 cm gap width, to produce a uniform web. The polypropylene resin composition described above was delivered from the die at a rate of 0.3 g/hole/min, and the resulting web collected on a perforated rotating drum collector positioned at a collector/die distance of 15 inches. The collector drum was connected to a vacuum system which could be optionally turned on or off while collecting the melt blown microfiber web, thereby allowing a higher solidity web to be prepared when a vacuum was applied to the collector drum. (Desired basis weights were obtained by adjusting (e.g. increasing) the rotational speed of the collector rather than reducing the resin delivery rate.) The average effective fiber diameter (EFD) for the webs obtained from this process was 12 µm. Two basis weight webs were prepared 30g/m² and 40 g/m². The prepared webs were subsequently charged using a hydro-charging process using a water pressure of about 100 psi (690 kPa), substantially as described in U.S. Pat. 5,496,507. (No pre- or post-charging treatment was applied.) The charged meltblown web material was wound on a roll for further processing.

The following summarized the prepared melt blown microfiber web materials

| Designation | Basis weight (g/m²) | EFD (µm) | Air permeability (l/m²xs) at 200 Pa | Thickness (mm) |
|---|---|---|---|---|
| M3 | 30 | 12 | 2856 | 0.61 |
| M4 | 40 | 12 | 2039 | 0.71 |

### Preparation of exemplary vehicle passenger compartment air filter devices

Web material fed from a roll of SF material (as described above), web material fed from a roll of prepared melt blown microfiber web (as described above) as well as web material fed from a roll of SL material (as described above) were superimposed (with the melt blown web material between the SF and SL web materials and the scrim of the SF web material facing towards the melt blown web material) and aligned via passing guiding rolls to give a superimposed material. The superimposed material was then pleated using a pleater unit (Rabowski Blade Pleater, commercially available from the company Rabowski, Berlin, Germany). In each instance the pleat height was 30 mm. The co-pleated medium was then cut in width and length (appropriately for a pleat distance of 8.5 mm for the test filter) and manually separated. The separated co-pleated medium packs were then manually glued on a cardboard frame to give a filter with dimensions, i.e. a filter face area, of 250 x 200 mm. In this manner the following vehicle passenger compartment air filters were prepared:

| Example No. | 2^{nd} filter layer | Pleat height (mm) | Pleat distance (mm) | No. of pleats | Designation |
|---|---|---|---|---|---|
| 1 | M3 | 30 | 8.5 | 29 | SF/M3/SL |
| 2 | M4 | 30 | 8.5 | 29 | SF/M4/SL |

### Preparation of Example A

Web material fed from a roll of SF material (as described above), web material fed from a roll of prepared M3 web (as described above) as well as web material fed from a roll of SL material (as described above) were fully laminated to one another (M3 web material being between the SF and SL web materials, with the scrim of the SF web material being adjacent to M3 web material) using a spray-coating adhesive SCOTCH FOTOMOUNT from 3M Company, USA. Similar to that described above the laminated material was pleated and prepared into a filter with dimensions of 250 x 200 mm:

| No. | 2^{nd} filter layer | Pleat height (mm) | Pleat distance (mm) | No. of pleats | Designation |
|---|---|---|---|---|---|
| A | M3 | 30 | 8.5 | 29 | SF=M3=SL |

### Testing Methods/Procedures

Testing for particulate filtration, e.g. particle efficiency, loading, and initial pressure drop, was conducted in accordance with E DIN 71460-1:2003-05 at an air temperature of 23 +/- 2 °C and a relative humidity of 50 +/- 3% (under ambient environmental pressure 1013 hPa) using a flow rate of 225 m³/h and 1.5 bar work pressure.

Test dust A4 (SAE coarse test dust) according to DIN ISO 12103-1 was used, together a fluidized bed from TSI type 3400 as an aerosol generator and a TSI APS Model 3321 particle counter having a measurement range of 0.5 to 11 µm aerodynamic particle size (0.3 to 7 µm geometric particle size). (No size specific dilutor was applied.)

Initial efficiencies for 0.4 µm geometric particles are reported herein as well as efficiencies for such particles during loading at pressure drop increases (dP) of 50 and 100 Pa.

For loading tests, filter sample was conditioned in accordance with comment 2 of section 8.3 of the DIN, and then the filter was loaded at aforesaid flow rate and work pressure with aforesaid test dust at a concentration of 160 mg/m³ to a final pressure drop equal to the pre-measured initial pressure drop plus 100 Pa in 4 steps of 25 Pa each.

The results are given in the following table:

| Example No. (Designation) | Initial efficiency for 0.4 µm particles | Loading after an increase of 100 Pa | Efficiency during loading [dp = 50 Pa] for 0.4 µm particles | Efficiency during loading [dp = 100 Pa] for 0.4 µm particles | Initial Pressure drop |
|---|---|---|---|---|---|
| | (%) | (g) | (%) | (%) | (Pa) |
| 1 SF/M3/SL | 98 | 51 | 97 | 98 | 52 |
| A SF=M3=SL | 98 | 28 | - | - | 55 |
| 2 SF/M4/SL | 99 | 52 | - | - | 54 |

## Claims

1. A vehicle passenger compartment air filter device comprising a filtration medium comprising:
(i) a first filter layer comprising an electrostatically charged split fiber nonwoven layer and optionally a scrim affixed to said split fiber layer;
(ii) a nonwoven web of electret charged thermoplastic microfibers as a second filter layer, said microfibers having an effective fiber diameter (EFD) of greater than 10 µm and comprising a thermoplastic resin having a resistivity greater than 10¹⁴ ohm·cm and an additive selected from fluorochemical compounds or oligomers, organic triazine compounds or oligomers, hindered amine compounds, aromatic amine compounds, nitrogen containing hindered phenols, metal containing hindered phenols and mixtures thereof; said web having a basis weight less than 60 g/m²; and
(iii) a support layer made of a web material having an air permeability of 3750 l/(m²xs) or more at 200 Pa;
said first filter layer being upstream from said second filter layer and said support layer being downstream from said second filter layer, wherein the first and second filter layers and the support layer are co-pleated and substantially non-bonded to one another except optionally at one or more of the outer edges of the filtration medium.

2. An air filter device according to claim 1, wherein said device comprises a filtration medium consisting essentially of:
(i) a first filter layer comprising an electrostatically charged split fiber nonwoven layer and optionally a scrim affixed to said split fiber layer;
(ii) a nonwoven web of electret charged thermoplastic microfibers as a second filter layer, said microfibers having an effective fiber diameter (EFD) of greater than 10 µm and comprising a thermoplastic resin having a resistivity greater than 10¹⁴ ohm·cm and an additive selected from fluorochemical compounds or oligomers, organic triazine compounds or oligomers, hindered amine compounds, aromatic amine compounds, nitrogen containing hindered phenols, metal containing hindered phenols and mixtures thereof; said web having a basis weight less than 60 g/m²; and
(iii) a support layer made of a web material having an air permeability of 3750 l/(m²xs) or more at 200 Pa;
said first filter layer being upstream from said second filter layer and said support layer being downstream, from said second filter layer, wherein the first and second filter layers and the support layer are co-pleated and substantially non-bonded to one another except optionally at one or more of the outer edges of the filtration medium.

3. An air filter device according to any preceding claim, wherein the first filter layer consists of one or more electrostatically charged split fiber nonwoven layers and optionally one or more scrims, each scrim being affixed to said split fiber layer or layers.

4. An air filter device according to any preceding claim, wherein the split fibers in the split fiber nonwoven are about 9 to about 15 µm in thickness, about 15 to about 75 µm in width.

5. An air filter device according to any preceding claim, wherein the split fibers in the split fiber nonwoven are 5 mm or greater in length.

6. An air filter device according to any preceding claim, wherein the spilt fibers in the split fiber nonwoven have an average length of from about 12 to about 70 mm.

7. An air filter device according to any preceding claim, wherein the split fiber nonwoven web layer or layers have a basis weight of less than 70 g/m².

8. An air filter device according to claim 7, wherein the split fiber nonwoven web layer or layers have a basis weight of less than 55 g/m².

9. An air filter device according to claim 8, wherein the split fiber nonwoven web layer or layers have a basis weight of less than 45 g/m².

10. An air filter device according to claim 9, wherein the split fiber nonwoven web layer or layers have a basis weight of less than 30 g/m².

11. An air filter device according to any one of claims 7 to 10, wherein the split fiber nonwoven web layer or layers have a basis weight of 5 g/m² or more.

12. An air filter device according to any preceding claim, wherein the first filter layer web material has an air permeability of 2800 l/(m²xs) or more at 200 Pa.

13. An air filter device according to claim 12, wherein the first filter layer web material has an air permeability of 9000 l/(m²xs) or less at 200 Pa.

14. An air filter device according to any preceding claim, wherein the first filter layer web material has aerosolized, neutralized NaCl filter efficiency of 10% or more.

15. An air filter device according to any preceding claim, wherein said scrim, if used, has an air permeability of 3750 l/(m²xs) or more at 200 Pa.

16. An air filter device according to any preceding claim, wherein said scrim, if used, has a basis weight of 15 g/m² or less.

17. An air filter device according to any preceding claim, wherein said scrim, if used, has a thickness of 0.3 mm or less.

18. An air filter device according to any preceding claim, wherein the microfibers of the second filter layer nonwoven web are hydrocharged.

19. An air filter device according to any preceding claim, wherein the second filter layer nonwoven web is a meltblown nonwoven web.

20. An air filter device according to any preceding claim, wherein the microfibers of the second filter layer have an EFD of 20 µm or less.

21. An air filter device according to any preceding claim, wherein the second filter layer nonwoven web has a basis weight of 20 g/m² or more.

22. An air filter device according to any preceding claim, wherein the second filter layer nonwoven web has an air permeability of 1000 l/(m²xs) or more at 200 Pa.

23. An air filter device according to claim 22, wherein the second filter layer nonwoven web has an air permeability of 3725 l/(m²xs) or less at 200 Pa.

24. An air filter device according to any preceding claim wherein the second filter layer nonwoven web has a thickness of 1.5 mm or less.

25. An air filter device according to claim 24, wherein the second filter layer nonwoven web has a thickness of 0.25 mm or more.

26. An air filter device according to any preceding claim, wherein the support layer web material has a basis weight of 60 g/m² or more

27. An air filter device according to claim 26, wherein the support layer web material has a basis weight of 150 g/m² or less.

28. An air filter device according to any preceding claim, wherein support layer web material has a tensile strength (MD) of 80N/5cm² or more.

29. An air filter device according to claim 28, wherein the support layer web material has a tensile strength (MD) of 250 N/5cm² or less.

30. An air filter device according to any preceding claim, wherein the support layer web material has a thickness of 1.0 mm or less.

31. An air filter device according to claim 30, wherein the support layer web material has a thickness of 0.1 mm or more.

32. An air filter device according to any preceding claim, wherein the filter device has an initial particle capture efficiency greater than 93% for 0.4 µm particles.

33. An air filter device according to any preceding claim, wherein the filter device has a particle capture efficiency of at least 90% for 0.4 µm particles during loading at an increase in pressure drop of 50 Pa.

34. An air filter device according to any preceding claim, wherein the filter device has a particle capture efficiency of at least 90% for 0.4 µm particles during loading at an increase in pressure drop of 100 Pa.

35. An air filter device according to any preceding claim, wherein the filter device has a loading capacity of at least 35 g after an increase in pressure drop of 100 Pa.

36. An air filter device according to any preceding claim, wherein the filter device has an initial pressure drop of not more than 70 Pa at a volumetric flow rate of 225 m³/h, when such filter device has a filter face area of 250 mm x 200 mm, a pleat height of 30 mm and a pleat distance of 5 to about 14 mm.

## Patentansprüche

1. Luftfiltervorrichtung für eine Fahrgastzelle, wobei die Luftfiltervorrichtung ein Filtrationsmedium umfasst, das Folgendes umfasst:
(i) eine erste Filterschicht, die eine elektrostatisch geladene Spaltfaservliesschicht und optional einen Gitterstoff, der an der Spaltfaserschicht befestigt ist, umfasst;
(ii) eine Vliesbahn aus Elektret-geladenen thermoplastischen Mikrofasern als eine zweite Filterschicht, wobei die Mikrofasern einen effektiven Faserdurchmesser (EFD) von größer als 10 µm haben, und ein thermoplastisches Harz, das einen spezifischen Widerstand von größer als 10¹⁴ Ohm•cm aufweist, und einen Zuschlagstoff umfassen, der ausgewählt ist aus fluorchemischen Verbindungen oder Oligomeren, organischen Triazinverbindungen oder Oligomeren, behinderten Aminverbindungen, aromatischen Aminverbindungen, Stickstoffenthaltenden behinderten Phenolen, Metall enhaltenden behinderten Phenolen und Gemischen davon; wobei die Bahn ein Basisgewicht von weniger als 60 g/m² aufweist; und
(iii)eine aus einem Bahnmaterial hergestellte Tragschicht mit einer Luftdurchlässigkeit von 3750 l/(m²xs) oder mehr bei 200 Pa;
wobei die erste Filterschicht stromaufwärts von der zweiten Filterschicht angeordnet ist und die Tragschicht stromabwärts von der zweiten Filterschicht angeordnet ist, wobei die erste und die zweite Filterschicht und die Tragschicht gemeinsam gefaltet sind und im Wesentlichen nicht miteinander verbondet sind, außer optional an einer oder mehreren der Außenränder des Filtrationsmediums.

2. Luftfiltervorrichtung nach Anspruch 1, wobei die Vorrichtung ein Filtrationsmedium umfasst, das im Wesentlichen aus Folgendem besteht:
(i) einer ersten Filterschicht, die eine elektrostatisch geladene Spaltfaservliesschicht und optional einen Gitterstoff, der an der Spaltfaserschicht angebracht ist, umfasst;
(ii) einer Vliesbahn aus Elektret-geladenen thermoplastischen Mikrofasern als eine zweite Filterschicht, wobei die Mikrofasern einen effektiven Faserdurchmesser (EFD) von größer als 10 µm haben, und ein thermoplastisches Harz, das einen spezifischen Widerstand von größer als 10¹⁴ Ohm•cm aufweist, und einen Zuschlagstoff aufweisen, der ausgewählt ist aus fluorchemischen Verbindungen oder Oligomeren, organischen Triazinverbindungen oder Oligomeren, behinderten Aminverbindungen, aromatischen Aminverbindungen, Stickstoffenthaltenden behinderten Phenolen, Metallenthaltenden behinderten Phenolen und Gemischen davon; wobei die Bahn ein Basisgewicht von weniger als 60 g/m² aufweist; und
(iii)einer aus einem Bahnmaterial hergestellten Tragschicht mit einer Luftdurchlässigkeit von 3750 l/(m²xs) oder mehr bei 200 Pa;
wobei die erste Filterschicht stromaufwärts von der zweiten Filterschicht angeordnet ist und die Tragschicht stromabwärts von der zweiten Filterschicht angeordnet ist, wobei die erste und die zweite Filterschicht und die Tragschicht gemeinsam gefaltet sind und im Wesentlichen nicht miteinander verbondet sind, außer optional an einer oder mehreren der Außenränder des Filtrationsmediums.

3. Luftfiltervorrichtung nach einem der vorangehenden Ansprüche, wobei die erste Filterschicht aus einer oder mehreren elektrostatisch geladenen Spaltfaservliesschichten und optional einem oder mehreren Gitterstoffen besteht, wobei jeder Gitterstoff an der einen oder den mehreren Spaltfaserschichten angebracht ist.

4. Luftfiltervorrichtung nach einem der vorangehenden Ansprüche, wobei die Spaltfasern in dem Spaltfaservlies etwa 9 bis etwa 15 µm dick sind und etwa 15 bis etwa 75 µm breit sind.

5. Luftfiltervorrichtung nach einem der vorangehenden Ansprüche, wobei die Spaltfasern in dem Spaltfaservlies 5 mm lang oder länger sind.

6. Luftfiltervorrichtung nach einem der vorangehenden Ansprüche, wobei die Spaltfasern in dem Spaltfaservlies eine durchschnittliche Länge von etwa 12 bis etwa 70 mm haben.

7. Luftfiltervorrichtung nach einem der vorangehenden Ansprüche, wobei die eine oder die mehreren Spaltfaservliesbahnschichten ein Basisgewicht von weniger als 70 g/m² haben.

8. Luftfiltervorrichtung nach Anspruch 7, wobei die eine oder die mehreren Spaltfaservliesbahnschichten ein Basisgewicht von weniger als 55 g/m² haben.

9. Luftfiltervorrichtung nach Anspruch 8, wobei die eine oder die mehreren Spaltfaservliesbahnschichten ein Basisgewicht von weniger als 45 g/m² haben.

10. Luftfiltervorrichtung nach Anspruch 9, wobei die eine oder die mehreren Spaltfaservliesbahnschichten ein Basisgewicht von weniger als 30 g/m² haben.

11. Luftfiltervorrichtung nach einem der Ansprüche 7 bis 10, wobei die eine oder die mehreren Spaltfaservliesbahnschichten ein Basisgewicht von 5 g/m² oder mehr haben.

12. Luftfiltervorrichtung nach einem der vorangehenden Ansprüche, wobei das erste Filterschichtbahnmaterial eine Luftdurchlässigkeit von 2800 l/(m²xs) oder mehr bei 200 Pa aufweist.

13. Luftfiltervorrichtung nach Anspruch 12, wobei das erste Filterschichtbahnmaterial eine Luftdurchlässigkeit von 9000 l/(m²xs) oder weniger bei 200 Pa aufweist.

14. Luftfiltervorrichtung nach einem der vorangehenden Ansprüche, wobei das erste Filterschichtbahnmaterial einen aerosolisierten, neutralisierten NaCl-Filterwirkungsgrad von 10 % oder mehr aufweist.

15. Luftfiltervorrichtung nach einem der vorangehenden Ansprüche, wobei der Gitterstoff, wenn er verwendet wird, eine Luftdurchlässigkeit von 3750 l/(m²xs) oder mehr bei 200 Pa aufweist.

16. Luftfiltervorrichtung nach einem der vorangehenden Ansprüche, wobei der Gitterstoff, wenn er verwendet wird, ein Basisgewicht von 15 g/m² oder weniger aufweist.

17. Luftfiltervorrichtung nach einem der vorangehenden Ansprüche, wobei der Gitterstoff, wenn er verwendet wird, eine Dicke von 0,3 mm oder weniger aufweist.

18. Luftfiltervorrichtung nach einem der vorangehenden Ansprüche, wobei die Mikrofasern der zweiten Filterschichtvliesbahn hydrogeladen sind.

19. Luftfiltervorrichtung nach einem der vorangehenden Ansprüche, wobei die zweite Filterschichtvliesbahn eine schmelzgeblasene Vliesbahn ist.

20. Luftfiltervorrichtung nach einem der vorangehenden Ansprüche, wobei die Mikrofasern der zweiten Filterschicht einen EFD von 20 µm oder weniger aufweisen.

21. Luftfiltervorrichtung nach einem der vorangehenden Ansprüche, wobei die zweite Filterschichtvliesbahn ein Basisgewicht von 20 g/m² oder mehr aufweist.

22. Luftfiltervorrichtung nach einem der vorangehenden Ansprüche, wobei die zweite Filterschichtvliesbahn eine Luftdurchlässigkeit von 1000 l/(m²xs) oder mehr bei 200 Pa aufweist.

23. Luftfiltervorrichtung nach Anspruch 22, wobei die zweite Filterschichtvliesbahn eine Luftdurchlässigkeit von 3725 l/(m²xs) oder weniger bei 200 Pa aufweist.

24. Luftfiltervorrichtung nach einem der vorangehenden Ansprüche, wobei die zweite Filterschichtvliesbahn eine Dicke von 1,5 mm oder weniger aufweist.

25. Luftfiltervorrichtung nach Anspruch 24, wobei die zweite Filterschichtvliesbahn eine Dicke von 0,25 mm oder mehr aufweist.

26. Luftfiltervorrichtung nach einem der vorangehenden Ansprüche, wobei das Tragschichtbahnmaterial ein Basisgewicht von 60 g/m² oder mehr aufweist.

27. Luftfiltervorrichtung nach Anspruch 26, wobei das Tragschichtbahnmaterial ein Basisgewicht von 150 g/m² oder weniger aufweist.

28. Luftfiltervorrichtung nach einem der vorangehenden Ansprüche, wobei Tragschichtbahnmaterial eine Zugfestigkeit (MD) von 80 N/5 cm² oder mehr aufweist.

29. Luftfiltervorrichtung nach Anspruch 28, wobei das Tragschichtbahnmaterial eine Zugfestigkeit (MD) von 250 N/5 cm² oder weniger aufweist.

30. Luftfiltervorrichtung nach einem der vorangehenden Ansprüche, wobei das Tragschichtbahnmaterial eine Dicke von 1,0 mm oder weniger aufweist.

31. Luftfiltervorrichtung nach Anspruch 30, wobei das Tragschichtbahnmaterial eine Dicke von 0,1 mm oder mehr aufweist.

32. Luftfiltervorrichtung nach einem der vorangehenden Ansprüche, wobei die Filtervorrichtung einen anfänglichen Teilcheneinfangwirkungsgrad von größer als 93% für 0,4 µm große Teilchen aufweist.

33. Luftfiltervorrichtung nach einem der vorangehenden Ansprüche, wobei die Filtervorrichtung einen Teilcheneinfangwirkungsgrad von mindestens 90% für 0,4 µm große Teilchen während des Beladens bei einer Zunahme des Druckabfalls von 50 Pa aufweist.

34. Luftfiltervorrichtung nach einem der vorangehenden Ansprüche, wobei die Filtervorrichtung einen Teilcheneinfangwirkungsgrad von mindestens 90% für 0,4 µm große Teilchen während des Beladens bei einer Zunahme des Druckabfalls von 100 Pa aufweist.

35. Luftfiltervorrichtung nach einem der vorangehenden Ansprüche, wobei die Filtervorrichtung eine Beladungskapazität von mindestens 35 g nach einer Zunahme des Druckabfalls von 100 Pa aufweist.

36. Luftfiltervorrichtung nach einem der vorangehenden Ansprüche, wobei die Filtervorrichtung einen anfänglichen Druckabfall von maximal 70 Pa bei einer Volumenströmungsrate von 225 m³/h aufweist, wenn die Filtervorrichtung eine Filterstirnfläche von 250 mm × 200 mm, eine Faltungshöhe von 30 mm und einen Faltungsabstand von 5 bis etwa 14 mm aufweist.

## Revendications

1. Dispositif de filtre à air pour habitacle de véhicule, comprenant un milieu filtrant comprenant :
(i) une première couche filtrante comprenant une couche non tissée de fibres divisées chargée électrostatiquement et éventuellement un canevas fixé à ladite couche de fibres divisées ;
(ii) une nappe non tissée de microfibres thermoplastiques à charge électret comme deuxième couche filtrante, lesdites microfibres ayant un diamètre effectif de fibre (DEF) supérieur à 10 µm et comprenant une résine thermoplastique ayant une résistivité supérieure à 10¹⁴ ohm•cm et un additif sélectionné parmi des composés ou oligomères fluorochimiques, des composés ou oligomères qui sont des triazines organiques, des composés qui sont des amines encombrées, des composés qui sont des amines aromatiques, des phénols encombrés contenant des atomes d'azote, des phénols encombrés contenant des atomes de métaux et des mélanges de ceux-ci ; ladite nappe ayant un grammage inférieur à 60 g/m² ; et
(iii) une couche de support constituée d'un matériau sous forme de nappe ayant une perméabilité à l'air de 3 750 l/(m²xs) ou plus à 200 Pa ;
ladite première couche filtrante se trouvant en amont de ladite deuxième couche filtrante et ladite couche de support se trouvant en aval de ladite deuxième couche filtrante, dans lequel la première couche filtrante et la deuxième couche filtrante et la couche de support sont plissées conjointement et fondamentalement non liées les unes aux autres sauf éventuellement au niveau d'un ou plusieurs des bords extérieurs du milieu filtrant.

2. Dispositif de filtre à air selon la revendication 1, dans lequel ledit dispositif comprend un milieu filtrant consistant essentiellement en :
(i) une première couche filtrante comprenant une couche non tissée de fibres divisées chargée électrostatiquement et éventuellement un canevas fixé à ladite couche de fibres divisées ;
(ii) une nappe non tissée de microfibres thermoplastiques à charge électret comme deuxième couche filtrante, lesdites microfibres ayant un diamètre effectif de fibre (DEF) supérieur à 10 µm et comprenant une résine thermoplastique ayant une résistivité supérieure à 10¹⁴ ohm•cm et un additif sélectionné parmi des composés ou oligomères fluorochimiques, des composé ou oligomères qui sont des triazines organiques, des composés qui sont des amines encombrées, des composés qui sont des amines aromatiques, des phénols encombrés contenant des atomes d'azote, des phénols encombrés contenant des atomes de métaux et des mélanges de ceux-ci ; ladite nappe ayant un grammage inférieur à 60 g/m² ; et
(iii) une couche de support constituée d'un matériau sous forme de nappe ayant une perméabilité à l'air de 3 750 l/(m²xs) ou plus à 200 Pa ;
ladite première couche filtrante se trouvant en amont de ladite deuxième couche filtrante et ladite couche de support se trouvant en aval de ladite deuxième couche filtrante, dans lequel la première couche filtrante et la deuxième couche filtrante et la couche de support sont plissées conjointement et fondamentalement non liées les unes aux autres sauf éventuellement au niveau d'un ou plusieurs des bords extérieurs du milieu filtrant.

3. Dispositif de filtre à air selon l'une quelconque des revendications précédentes, dans lequel la première couche filtrante consiste en une ou plusieurs couches non tissées de fibres divisées chargées électrostatiquement et éventuellement un ou plusieurs canevas, chaque canevas étant fixé à ladite couche ou auxdites couches de fibres divisées.

4. Dispositif de filtre à air selon l'une quelconque des revendications précédentes, dans lequel les fibres divisées dans le non-tissé de fibres divisées mesurent environ 9 à environ 15 µm d'épaisseur, et environ 15 à environ 75 µm de largeur.

5. Dispositif de filtre à air selon l'une quelconque des revendications précédentes, dans lequel les fibres divisées dans le non-tissé de fibres divisées mesurent 5 mm ou plus de longueur.

6. Dispositif de filtre à air selon l'une quelconque des revendications précédentes, dans lequel les fibres divisées dans le non-tissé de fibres divisées ont une longueur moyenne d'environ 12 à environ 70 mm.

7. Dispositif de filtre à air selon l'une quelconque des revendications précédentes, dans lequel la couche ou les couches de nappe non tissée de fibres divisées ont un grammage inférieur à 70 g/m².

8. Dispositif de filtre à air selon la revendication 7, dans lequel la couche ou les couches de nappe non tissée de fibres divisées ont un grammage inférieur à 55 g/m².

9. Dispositif de filtre à air selon la revendication 8, dans lequel la couche ou les couches de nappe non tissée de fibres divisées ont un grammage inférieur à 45 g/m².

10. Dispositif de filtre à air selon la revendication 9, dans lequel la couche ou les couches de nappe non tissée de fibres divisées ont un grammage inférieur à 30 g/m².

11. Dispositif de filtre à air selon l'une quelconque des revendications 7 à 10, dans lequel la couche ou les couches de nappe non tissée de fibres divisées ont un grammage de 5 g/m² ou plus.

12. Dispositif de filtre à air selon l'une quelconque des revendications précédentes, dans lequel le matériau sous forme de nappe de la première couche filtrante a une perméabilité à l'air de 2 800 l/(m²xs) ou plus à 200 Pa.

13. Dispositif de filtre à air selon la revendication 12, dans lequel le matériau sous forme de nappe de la première couche filtrante a une perméabilité à l'air de 9 000 l/(m²xs) ou moins à 200 Pa.

14. Dispositif de filtre à air selon l'une quelconque des revendications précédentes, dans lequel le matériau sous forme de nappe de la première couche filtrante a un rendement de filtration pour le NaCl neutralisé en aérosol de 10 % ou plus.

15. Dispositif de filtre à air selon l'une quelconque des revendications précédentes, dans lequel ledit canevas, s'il est utilisé, a une perméabilité à l'air de 3 750 l/(m²xs) ou plus à 200 Pa.

16. Dispositif de filtre à air selon l'une quelconque des revendications précédentes, dans lequel ledit canevas, s'il est utilisé, a un grammage de 15 g/m² ou moins.

17. Dispositif de filtre à air selon l'une quelconque des revendications précédentes, dans lequel ledit canevas, s'il est utilisé, a une épaisseur de 0,3 mm ou moins.

18. Dispositif de filtre à air selon l'une quelconque des revendications précédentes, dans lequel les microfibres de la nappe non tissée de la deuxième couche filtrante sont hydrochargées.

19. Dispositif de filtre à air selon l'une quelconque des revendications précédentes, dans lequel la nappe non tissée de la deuxième couche filtrante est une nappe non tissée extrudée soufflée.

20. Dispositif de filtre à air selon l'une quelconque des revendications précédentes, dans lequel les microfibres de la deuxième couche filtrante ont un DEF de 20 µm ou moins.

21. Dispositif de filtre à air selon l'une quelconque des revendications précédentes, dans lequel la nappe non tissée de la deuxième couche filtrante a un grammage de 20 g/m² ou plus.

22. Dispositif de filtre à air selon l'une quelconque des revendications précédentes, dans lequel la nappe non tissée de la deuxième couche filtrante a une perméabilité à l'air de 1 000 l/(m²xs) ou plus à 200 Pa.

23. Dispositif de filtre à air selon la revendication 22, dans lequel la nappe non tissée de la deuxième couche filtrante a une perméabilité à l'air de 3 725 l/(m²xs) ou moins à 200 Pa.

24. Dispositif de filtre à air selon l'une quelconque des revendications précédentes, dans lequel la nappe non tissée de la deuxième couche filtrante a une épaisseur de 1,5 mm ou moins.

25. Dispositif de filtre à air selon la revendication 24, dans lequel la nappe non tissée de la deuxième couche filtrante a une épaisseur de 0,25 mm ou plus.

26. Dispositif de filtre à air selon l'une quelconque des revendications précédentes, dans lequel le matériau sous forme de nappe de la couche de support a un grammage de 60 g/m² ou plus.

27. Dispositif de filtre à air selon la revendication 26, dans lequel le matériau sous forme de nappe de la couche de support a un grammage de 150 g/m² ou moins.

28. Dispositif de filtre à air selon l'une quelconque des revendications précédentes, dans lequel le matériau sous forme de nappe de la couche de support a une résistance à la traction (SM) de 80 N/5 cm² ou plus.

29. Dispositif de filtre à air selon la revendication 28, dans lequel le matériau sous forme de nappe de la couche de support a une résistance à la traction (SM) de 250 N/5 cm² ou moins.

30. Dispositif de filtre à air selon l'une quelconque des revendications précédentes, dans lequel le matériau sous forme de nappe de la couche de support a une épaisseur de 1,0 mm ou moins.

31. Dispositif de filtre à air selon la revendication 30, dans lequel le matériau sous forme de nappe de la couche de support a une épaisseur de 0,1 mm ou plus.

32. Dispositif de filtre à air selon l'une quelconque des revendications précédentes, dans lequel le dispositif de filtre a un rendement initial de retenue des particules supérieur à 93 % pour des particules de 0,4 µm.

33. Dispositif de filtre à air selon l'une quelconque des revendications précédentes, dans lequel le dispositif de filtre a un rendement de retenue des particules d'au moins 90 % pour des particules de 0,4 µm durant un chargement à une augmentation de chute de pression de 50 Pa.

34. Dispositif de filtre à air selon l'une quelconque des revendications précédentes, dans lequel le dispositif de filtre a un rendement de retenue des particules d'au moins 90 % pour des particules de 0,4 µm durant un chargement à une augmentation de chute de pression de 100 Pa.

35. Dispositif de filtre à air selon l'une quelconque des revendications précédentes, dans lequel le dispositif de filtre a une capacité de chargement d'au moins 35 g après une augmentation de chute de pression de 100 Pa.

36. Dispositif de filtre à air selon l'une quelconque des revendications précédentes, dans lequel le dispositif de filtre a une chute de pression initiale ne dépassant pas 70 Pa à un débit volumétrique de 225 m³/h, quand ce dispositif de filtre a une surface frontale de filtre de 250 mm x 200 mm, une hauteur de pli de 30 mm et une distance entre les plis de 5 à environ 14 mm.
